Europäisches Patentamt

European Patent Office

Office européen des brevets

(19)

(11) Numéro de publication: **0 239 471**
**B1**

(12) **FASCICULE DE BREVET EUROPEEN**

(45) Date de publication du fascicule du brevet:
**23.05.90**

(51) Int. Cl.⁵: **F16D 25/14**, F16D 43/284

(21) Numéro de dépôt: **87400583.8**

(22) Date de dépôt: **17.03.87**

(54) **Dispositif d'assistance hydraulique.**

(30) Priorité: **26.03.86 FR 8604356**

(43) Date de publication de la demande:
**30.09.87 Bulletin 87/40**

(45) Mention de la délivrance du brevet:
**23.05.90 Bulletin 90/21**

(84) Etats contractants désignés:
**DE ES GB IT**

(56) Documents cités:
**DE-A- 1 914 545**
**DE-B- 1 953 499**
**FR-A- 1 543 213**
**FR-E- 79 576**
**GB-A- 2 117 475**

(73) Titulaire: **BENDIX France, 126, rue de Stalingrad,**
**F-93700 Drancy(FR)**

(72) Inventeur: **Kervagoret, Gilbert, 5 Impasse Nobleterre,**
**F-95100 Argenteuil(FR)**

(74) Mandataire: **Lejet, Christian et al, BENDIX FRANCE**
**Division Technique Service Brevets Bendix**
**Europe 126 rue de Stalingrad, F-93700 Drancy(FR)**

ACTORUM AG

## Description

La présente invention se rapporte à des dispositifs d'assistance hydraulique et, plus particulièrement à de tels dispositifs destinés à des systèmes d'embrayage de véhicules automobiles.

Il est connu du document GB-A 2 117 475 un système de commande d'embrayage et de freins pour transporteur, comportant une valve, actionnée par solénoïde, commandant l'application et le relachement rapide du frein, pendant qu'elle initialise le fonctionnement d'une valve relais qui commande l'application et le relachement de l'embrayage. Un temporisateur sous forme d'amortisseur fluide coopère avec la valve relais pour commander la vitesse de déplacement du distributeur pour obtenir un embrayage progressif.

Dans certaines conditions, notamment sur des sols à basse adhérence, le freinage des roues d'un véhicule par le moteur, lors d'un ralentissement, appelé "frein moteur, est trop élevé et peut provoquer un dérapage intempestif du véhicule. Ce phénomène risque particulièrement de se produire avec des véhicules à quatre roues motrices ou à propulsion arrière.

La présente invention a donc pour objet de proposer, pour un véhicule automobile, pourvu typiquement d'un système de freinage anti-dérapage, un dispositif d'assistance hydraulique destiné à débrayer les roues d'un véhicule en fonction d'un signal électrique donné, image de la vitesse du véhicule, typiquement des vitesses de roues, et provenant, par exemple du système de freinage anti-dérapage.

Pour ce faire, l'invention propose un dispositif d'assistance hydraulique comprenant un moyen de valve électromagnétique disposé entre un actionneur et une source de fluide sous pression, l'actionneur comprenant un moyen de piston, déplaçable sous l'effet du fluide sous pression, dispositif caractérisé en ce qu'il est destiné à être disposé en parallèle avec un circuit primaire d'actionnement entre un émetteur et un récepteur, et en ce que le moyen de piston est destiné à actionner indépendamment le récepteur en réponse à un signal de commande électrique fourni au moyen de valve.

D'autres caractéristiques et avantages de la présente invention ressortiront de la description suivante de deux modes de réalisation, donnés à titre illustratif, mais nullement limitatif, faite en relation avec les dessins annexés, sur lesquels:

- la figure 1 est une vue en coupe longitudinale schématique d'un premier mode de réalisation de dispositif d'assistance hydraulique selon l'invention ; et
- la figure 2 est une vue en coupe longitudinale similaire d'un deuxième mode de réalisation.

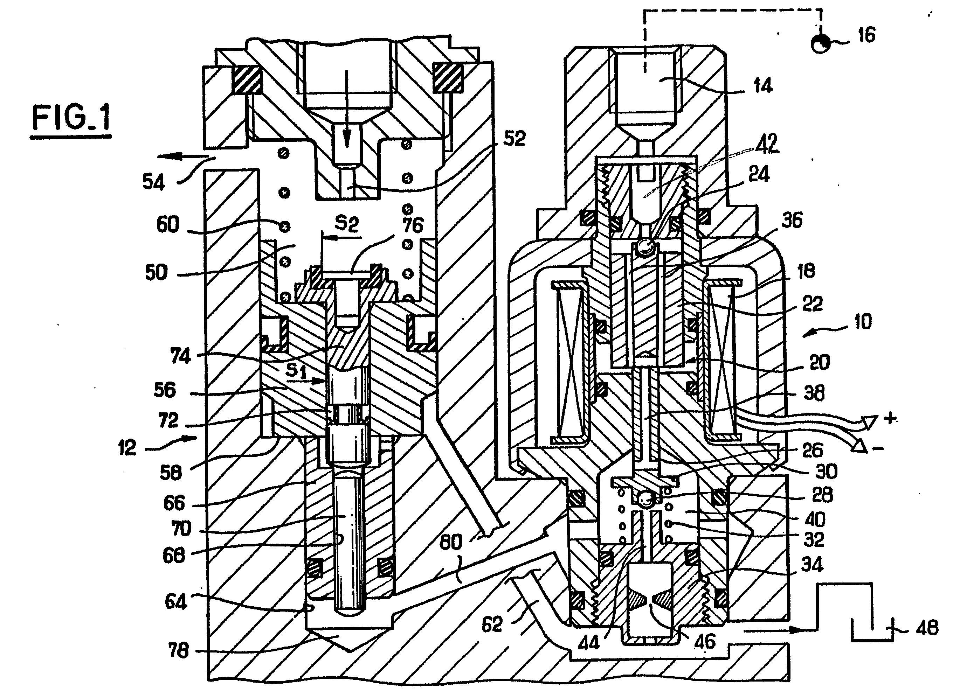

Comme représenté sur la figure 1, le dispositif d'assistance hydraulique, qui, dans l'exemple illustré est destiné à être associé à un système d'embrayage hydraulique, comprend, de façon générale, une électrovalve 10 et un actionneur hydraulique 12 stationnaires. L'électrovalve 10 est pourvue d'une entrée 14 destinée à être raccordée à une source de fluide hydraulique sous pression 16, par exemple un accumulateur d'un système de freinage (non représenté). L'électrovalve 10 comprend un solénoïde 18, destiné à être relié à un circuit électrique d'actionnement (non représenté), par exemple un circuit de traitement de signaux de capteurs de vitesse de roues d'un sytème de freinage anti-dérapage, à l'intérieur duquel est monté un moyen de plongeur 20. Le moyen de plongeur 20 comprend un premier élément 22 pourvu d'une bille 24 et un deuxième élément 26 également pourvu d'une bille 28 et comportant une collerette 30 contre laquelle prend appui un ressort 32 monté sur un élément de fermeture 34 dans l'électrovalve 10. Le moyen de plongeur 20 comporte au moins deux passages 36 dans le premier élément 22 et un passage 38 dans le deuxième élément 26 qui, ensemble, sont susceptibles de relier l'entrée 14 à une chambre 40 à l'intérieur de l'électrovalve 10.

Dans la position de repos illustrée de l'électrovalve 10, le ressort 32 sollicite le moyen de plongeur dans une position où la bille 24 ferme un passage 42 relié à l'entrée 14. De même, dans la position de repos, la bille 28 ouvre un passage 44, dans l'élément de fermeture 34, pourvu d'une restriction 46, et qui mène à un réservoir basse pression 48.

L'actionneur hydraulique 12 comprend une chambre de travail 50 destinée à être reliée, par une entrée 52, à un émetteur hydraulique d'embrayage (non représenté) et, par une sortie 54, à un récepteur d'embrayage (non représenté). Dans la chambre de travail 50 est monté à coulissement étanche un piston 56 et qui est sollicité vers sa position de repos illustrée en butée sur un fond 58 de la chambre de travail 50 par un ressort 60. Le fond de la chambre de travail 50, à l'arrière du piston 56, est relié au réservoir basse pression 48 par un passage 62. L'actionneur hydraulique 12 comprend, de plus, un alésage 64 débouchant dans la chambre de travail 50 et dans lequel est monté à coulissement étanche un deuxième piston 66. Le deuxième piston 66 comporte un alésage longitudinal 68 dans lequel est monté coulissant un poussoir 70. Le piston 56 comporte aussi un alésage longitudinal 72, de section $S_1$, en alignement avec l'alésage 68, et dans lequel est monté à coulissement étanche un ensemble de clapet 74 qui fait saillie dans la chambre de travail 50 et comporte un clapet, par exemple en élastomère 76 susceptible de fermer l'entrée 52 et de section $S_2$ supérieure à $S_1$. Le fond 78 de l'alésage 64 est relié par un passage 80 à la chambre 40 de l'électrovalve 10.

Le fonctionnement du dispositif ainsi décrit est le suivant :

Dans la position de repos illustrée du dispositif, où le solénoïde n'est pas excité, l'entrée 14 est fermée par la bille 24 sous l'effet du ressort 32, isolant ainsi la chambre 40 de la source haute pression 16. La bille 28 étant dans sa position ouverte, la chambre 40 est en communication hydraulique avec le réservoir 48. L'actionneur hydraulique 12 est dans sa position de repos illustrée et l'embrayage du véhicule peut être sélectivement actionné, le fluide hydraulique passant de l'entrée 52 à la sortie 54 par la chambre de travail 50.

Lors d'une détection d'une tendance au blocage ou au dérapage des roues du véhicule, le circuit électrique actionne le solénoïde 18 provoquant le déplacement, vers le bas en regardant le dessin, du moyen de plongeur 20, ouvrant l'entrée 14 et permettant au fluide sous pression de passer de la source 16 par les passages 36 et 38 vers la chambre 40. La chambre 40 étant isolée du réservoir 48 par la fermeture du passage 44 par la bille 28, le fluide sous pression passe de la chambre 40 au fond 78 de l'alésage 64 par le passage 80. La pression hydraulique au fond 78 de l'alésage 64 agit sur le poussoir 70 et sur l'ensemble du piston 56 et du deuxième piston 66. Le faible frottement et l'inertie de l'ensemble du poussoir 70 et l'ensemble de clapet 74 a pour résultat que cet ensemble se déplace très rapidement et le clapet 76 vient fermer l'entrée 52. Il est important de fermer l'entrée 52 avant de créer une pression dans la chambre de travail 50 pour éviter que le fluide ne remonte vers le réservoir basse pression de l'émetteur d'embrayage qui, n'étant pas actionné, a toujours son passage de retour au réservoir ouvert.

Dès la fermeture de l'entrée 52, l'ensemble du piston 56 et deuxième piston 66 se déplace, créant ainsi immédiatement une pression hydraulique dans la chambre de travail 50 qui est transmise au récepteur d'embrayage. L'action de la pression de fluide dans la chambre 50 sur les sections $S_1$ et $S_2$ empêche, dans ces conditions, une ouverture intempestive du clapet 76 dans le cas d'un actionnement réflexe par le conducteur de l'émetteur d'embrayage.

Une fois que les roues du véhicule commencent à réaccéler, le circuit électrique désexcite l'électrovalve 10, provoquant la fermeture de l'entrée 14 et l'ouverture du passage 44. La pression hydraulique dans le fond 78 de l'alésage 64 diminue alors progressivement, en raison de la restriction 46, et les éléments de l'actionneur hydraulique reprennent progressivement leurs positions de repos, assurant ainsi un re-embrayage progressif.

Dans une variante de réalisation (non-représentée), l'entrée 52 débouche au fond de la chambre de travail 50, le piston 56 comportant un passage destiné à être fermé, lors d'une mise en oeuvre du dispositif, par l'ensemble de clapet 74 solidaire du deuxième 66.

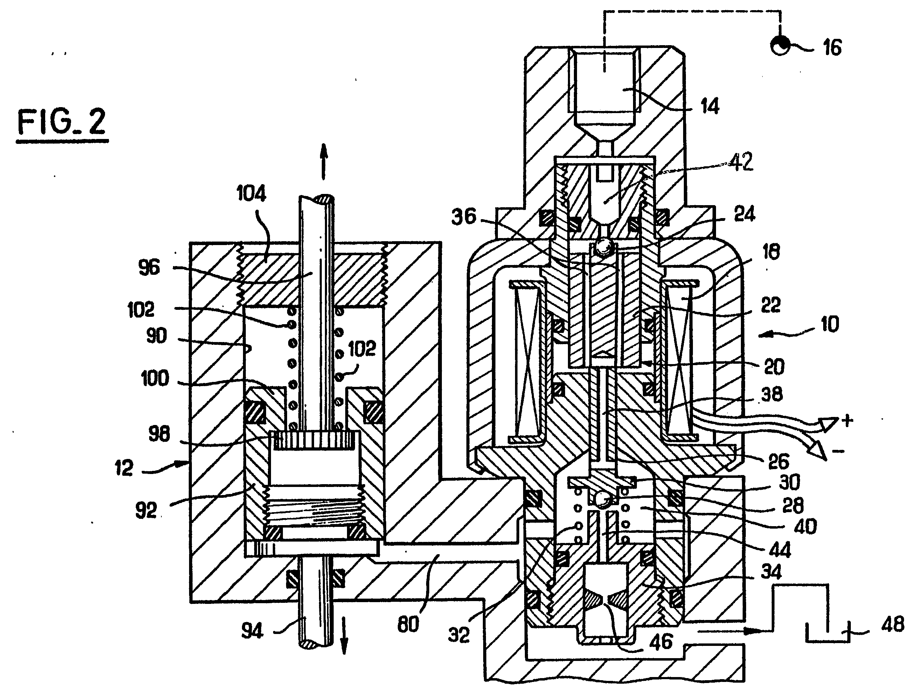

Le dispositif d'assistance hydraulique représenté sur la figure 2 est destiné à être associé à un système d'embrayage à commande mécanique. Dans ce mode de réalisation, l'électrovalve 10 est sensiblement identique à celle du dispositif de la figure 1 et ne sera pas décrite à nouveau.

L'actionneur mécanique 12 comporte un alésage 90 dans lequel est actioné à coulissement étanche un moyen de piston 92 solidaire d'un premier câble ou tige 94 destiné à être relié un récepteur d'embrayage (non-représenté). Un deuxième câble ou tige 96, destiné à être relié à un émetteur d'embrayage (non-représenté), comporte une tête élargie 98 retenue par un accouplement à course morte dans le moyen de piston 92 par une projection annulaire 100 sur le moyen de piston 92. Un ressort 102 est monté sur le câble 96 et prend appui sur la tête élargie et sur un élément de fermeture 104 fixé dans l'alésage 90. Le ressort 102 maintient le câble 96 en traction, maintenant ainsi la pédale d'embrayage (non-représentée) sur sa butée de repos.

Lors d'une mise en oeuvre de l'électrovalve 10, qui se passe comme décrit plus avant, le fluide sous pression est envoyé de la source 16 par la chambre 40 et le passage 80 vers l'alésage 90 de l'actionneur 12. Le moyen de piston 92 se déplace dans l'alésage 90 sous l'effet de la pression hydraulique et, par l'intermédiaire du câble 94, provoque le débrayage immédat de l'embrayage. Comme c'était le cas pour le premier mode de réalisation, quand l'électrovalve 10 est désexcitée, elle permet au fluide dans l'alésage 90 de retourner vers le réservoir basse pression 48 par la restriction 46, provoquant ainsi un ré-embrayage progressif. Les câbles 94 et 96 demeurant couplés mécaniquement, le fonctionnement normal (manuel) de l'embrayage est assuré en toutes circonstances.

## Revendications

1. Dispositif d'assistance hydraulique comprenant un moyen de valve électromagnétique (10) disposé entre un actionneur (12) et une source de fluide sous pression (16), l'actionneur (12) comprenant un moyen de piston (56, 66, 92), déplaçable sous l'effet du fluide sous pression, dispositif caractérisé en ce qu'il est destiné à être disposé en parallèle avec un circuit primaire d'actionnement entre un émetteur et un récepteur, et en ce que le moyen de piston (56, 66, 92) est destiné à actionner indépendamment le récepteur en réponse à un signal de commande électrique fourni au moyen de valve (10).

2. Dispositif selon la revendication 1, caractérisé en ce que le circuit primaire d'actionnement est un circuit hydraulique, le déplacement du moyen de piston (55, 66) créant une pression dans ledit circuit.

3. Dispositif selon la revendication 1, caractérisé en ce que le circuit primaire d'actionnement comprend un raccordement mécanique (94, 96) entre l'émetteur et le récepteur, le déplacement du moyen de piston (92) provoquant l'actionnement du raccordement mécanique.

4. Dispositif selon la revendication 2, caractérisé en ce que le moyen de piston (56, 66) comporte un moyen de clapet (52, 74, 76) destiné à fermer le passage hydraulique entre l'émetteur et le récepteur lors d'un déplacement du moyen de piston (56, 66).

5. Dispositif selon la revendication 3, caractérisé en ce que le moyen de piston (92) est relié au raccordement mécanique (96) par un accouplement à course morte (98, 100).

6. Dispositif selon l'une des revendications 1 à 5, caractérisé en ce qu'il comprend une restriction (46) dans un passage hydraulique entre le moyen de piston (56, 66, 92) et un réservoir basse pression (48).

## Patentansprüche

1. Hydraulische Servovorrichtung, mit einem elektromagnetischen Ventilmittel (10), das zwischen einem Aktuator (12) und einer unter Druck stehenden Fluidquelle (16) angeordnet ist, wobei der Aktuator (12) eine Kolbeneinrichtung (56, 66, 92) umfaßt, die unter der Wirkung des Fluids unter Druck verschiebbar ist, dadurch gekennzeichnet, daß sie dazu bestimmt ist, mit einem primären Betätigungskreis zwischen einem Sender und einem Empfänger parallel geschaltet zu werden, und daß die Kolbeneinrichtung (56, 66, 92) dazu bestimmt ist, den Empfänger als Antwort auf ein elektrisches Steuersignal, das an das Ventilmittel (10) abgegeben wird, selbständig zu betätigen.

2. Vorrichtung nach Anspruch 1, dadurch gekennzeichnet, daß der primäre Betätigungskreis; ein hydraulischer Kreis ist, wobei die Verschiebung der Kolbeneinrichtung (55, 66) einen Druck in dem Kreis erzeugt.

3. Vorrichtung nach Anspruch 1, dadurch gekennzeichnet, daß der primäre Betätigungskreis einen mechanischen Anschluß (94, 96) zwischen dem Sender und dem Empfänger umfaßt, wobei die Verschiebung der Kolbeneinrichtung (92) die Betätigung des mechanischen Anschlusses bewirkt.

4. Vorrichtung nach Anspruch 2, dadurch gekennzeichnet, daß die Kolbeneinrichtung (56, 66) ein Klappenventilmittel (52, 74, 76) umfaßt, das dazu bestimmt ist, während einer Verschiebung der Kolbeneinrichtung (56, 66) den hydraulischen Durchgang zwischen dem Sender und dem Empfänger zu schließen.

5. Vorrichtung nach Anspruch 3, dadurch gekennzeichnet, daß die Kolbeneinrichtung (92) mit dem mechanischen Anschluß (96) durch eine Kupplung (98, 100) mit Totgang verbunden ist.

6. Vorrichtung nach einem der Ansprüche 1 bis 5, dadurch gekennzeichnet, daß sie ein Reduzierelement (46) in einem hydraulischen Durchgang zwischen dem Kolbenmittel (56, 66, 92) und einem Niederdruck-Behälter (48) umfaßt.

## Claims

1. Hydraulic booster device comprising an electromagnetic valve means (10) arranged between an actuator (12) and a pressure-fluid source (16), the actuator (12) comprising a piston means (56, 66, 92) displaceable under the effect of the pressure-fluid, the device being characterized in that it is intended to be arranged in parallel with a primary actuation circuit between a transmitter and a receiver, and in that the piston (56, 66, 92) is intended to actuate the receiver independently in response to an electrical control signal supplied to the valve means (10).

2. Device according to Claim 1, characterized in that the primary actuation circuit is a hydraulic circuit, the movement of the piston means (55, 66) generating a pressure in the said circuit.

3. Device according to Claim 1, characterized in that the primary actuation circuit comprises a mechanical connection (94, 96) between the transmitter and the receiver, the movement of the piston means (92) causing the mechanical connection to be actuated.

4. Device according to Claim 2, characterized in that the piston means (56, 66) has a valve means (52, 74, 76) intended to close the hydraulic passage between the transmitter and the receiver during a movement of the piston means (56, 66).

5. Device according to Claim 3, characterized in that the piston means (92) is connected to the mechanical connection (96) by means of a lost motion coupling (98, 100).

6. Device according to one of Claims 1 to 5, characterized in that it comprises a restriction (46) in a hydraulic passage between the piston means (56, 66, 92) and a low-pressure reservoir (48).

# FIG.1

EP 0 239 471 B1

FIG. 2